(19) **Europäisches Patentamt / European Patent Office / Office européen des brevets**

(11) **EP 2 119 732 A1**

(12) **EUROPEAN PATENT APPLICATION**

(43) Date of publication:
**18.11.2009 Bulletin 2009/47**

(51) Int Cl.:
*C08F 10/00* $^{(2006.01)}$   *C08F 4/6592* $^{(2006.01)}$

(21) Application number: **08103994.3**

(22) Date of filing: **16.05.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Borealis Technology Oy**
**06101 Porvoo (FI)**

(72) Inventors:
• **Maaranen, Janne**
  **04260 Kerava (FI)**
• **Kallio, Kalle**
  **206400 Porvoo (FI)**
• **Kokko, Esa**
  **01520 Vantaa (FI)**

• **Severn, John**
  **00810 Helsinki (FI)**
• **Telén, Tuula**
  **06100 Porvoo (FI)**
• **Kauhanen, Jyrki**
  **07230 Monninkylä (FI)**
• **Lommi, Marjaana**
  **06400 Porvoo (FI)**
• **Sutela, Marita**
  **11100 Riihimäki (FI)**
• **Shih, Keng-Yu**
  **Clarksville, MD 21029 (US)**

(74) Representative: **Lindinger, Ingrid**
  **Borealis Polyolefine GmbH**
  **St.-Peter-Straße 25**
  **4021 Linz (AT)**

(54) **Metallocene catalyst compositions with improved properties, process for its preparation and use for preparing polyolefin homo- or copolymers**

(57)  Supported, high purity catalyst composition with improved properties for producing polyolefins comprising
a) an alumoxane-impregnated support prepared by contacting an alumoxane with silica as an inert carrier material and heating to a temperature from 50°C to 100°C and
b) a metallocene compound of formula I

$$(Cp)_2MX_2 \qquad (I)$$

wherein both Cp are an optionally substituted or an optionally fused homo- or heterocyclopentadienyl ligand;
M is Zr or Hf;
and both X are $-CH_2-Y$, wherein Y is $C_{6-20}$-aryl, $C_{6-20}$-heteroaryl, $C_{1-20}$-alkoxy, $C_{6-20}$-aryloxy, $-NR_2$, $-SiR_3$ or $OSiR_3$,
R being a $C_{1-20}$ hydrocarbyl or in case of $-NR_2$, the two substituents R can form a ring together with the nitrogen atom wherein they are attached to,

their preparation and use for producing polyolefins.

EP 2 119 732 A1

**Description**

The invention relates to a supported catalyst composition with improved properties comprising a support material, alumoxanes and special metallocene complexes, to a process for preparing such a supported catalyst composition, to a polymerization process using such catalysts and polyolefin homo- or copolymers prepared by this process.

The use of metallocene catalysts in olefin polymerization has been known for many years. Metallocene compounds/procatalysts are conventionally activated using a cocatalyst such as an alumoxane known from the literature to form the active metallocene catalyst species.

A generally known problem in the use of metallocene catalysts is the poor morphology of the forming polymer material. Since the so-called replica phenomenon applies to polymerization, i.e. the forming polymer particles obtain a morphology, similar to that of the catalyst particles used for their preparation, the problem can be solved only by improving the morphology of the catalyst used for the polymerization.

EP 0 279 863 describes the preparation, by a slurry process, of a catalyst intended for the polymerization of alpha-olefins. The catalyst thereby obtained is further given a finishing treatment by polymerizing olefin onto its surface; this suggests a poor morphology of the original catalyst, an attempt being made to improve it by this so-called prepolymerisation.

US 5 017 665 discloses a catalyst suitable for copolymerizing ethylene and 1,4-hexadiene, the catalyst being prepared by adding a alumoxanes solution in toluene to a silica powder. Thereafter, toluene is further added to the silica treated with alumoxanes, whereafter bis(indenyl) zirconium dichloride slurried in toluene is added to the obtained slurry. Finally the treated support is dried. Table I of the said patent shows that the activity of the obtained catalyst is not very good, but very low for practical purpose.

EP 0347 128 discloses a process for the preparation of a bis(cyclopentadienyl)zirconium alumoxanes catalyst on a silica support, wherein a methyl alumoxanes solution in toluene was poured onto a silica gel and dried. Thereafter a solution of bis(cyclopentadienyl)zirconium dichloride derivative in toluene was added in drops to said alumoxanes-treated silica gel and a small amount of toluene was further added to form a slurry. Finally the slurry was dried and a supported catalyst having a zirconium concentration of approx. 0.5 wt% was obtained. Before the actual polymerization, the catalyst was coated by prepolymerisation.

EP 0 776 908 discloses a supported catalyst composition for the polymerization of olefins which comprises methylalumoxane (MAO) and a metallocene. Such a supported catalyst is produced by mixing a methylalumoxane with toluene and adding thereto silica. The resulting slurry is stirred for 5 hours at elevated temperatures (90°C). Then the slurry is allowed to cool to room temperature and stirred for 12 hours. To this mixture a solution of the metallocene (bis (n-butylcyclopentadienyl)zirconium dichloride) in toluene is added. The solution is further stirred and afterwards toluene is removed under partial vacuum and heating to about 100°C with a nitrogen sweep over the material. Alternatively, silica, toluene and MAO in toluene are charged to a flask. The mixture is then stirred for several hours at elevated temperature (85 - 95°C). Afterwards the flask is allowed to cool down to room temperature and metallocene (bis(cyclopentadienyl)zirconium dichloride) and toluene are added. The solution is further stirred and afterwards toluene is removed by drying under vacuum at 45°C.

These supported catalyst compositions further comprise a bulky aluminium compound and additional MAO in order to yield an increased short chain branch frequency at a given level of comonomer.

According to EP 0897 394 a) a solution of an alumoxanes in an aromatic hydrocarbon solvent is heated at a temperature of from 45 to 150°C for at least 3 hours prior to placing the alumoxanes on the support; and b) further placing on a catalyst support in the presence of an inert inorganic solvent the heat treated alumoxanes of a) and a metallocene and/or transition metal catalysts composition, to thereby form a supported catalyst.

EP 0 792 297 describes a supported catalyst component comprising a support material and an alumoxanes, which component contains 15 to 40 weight percent of aluminium, based on the total weight of the support material and alumoxanes. This supported catalyst component is obtained by first mixing a carrier, like silica and a MAO solution in toluene, stirring this mixture for several hours (16 hours; Example 2), removing toluene under reduced pressure at 20°C and drying the solids under vacuum for several hours (16 hours, Example 2) at 20°C to yield a free-flowing powder. This powder is then heated at 100°C (Example 4), 150°C (Example 5, 7, 8, 9 and 13), and 175°C (Example 6, 10, 11, 12 and 14) for two hours under vacuum. Optionally the so obtained support is washed and dried again before combining it with [(tert-butylamido) (tetramethyl-$\eta^5$-cyclopentadienyl) (dimethyl) silane] titanium dimethyl as metallocene compound to yield a supported catalyst.

These supported catalysts reduce the problem of reactor fouling and provide polymers with high bulk densities, as is stated in EP 0 792 297.

Furthermore supported catalyst systems are known from EP 1 231 225. According to this document a particulate catalyst support is provided in which again an alumoxane is incorporated onto the support particles. This is done by contacting the support particles with alumoxanes in an aromatic liquid, like toluene, heating this mixture to 115°C in the case of toluene being the aromatic liquid, for several hours, then cooling said mixture to room temperature and separating the alumoxanes-containing support from the aromatic liquid. Afterwards the alumoxanes-containing support is washed to remove excess alumoxanes.

In the next step the alumoxanes-containing support is cooled to a temperature of 10°C or less and a metallocene (racemic-dimethylsilyl bis(2-methyl-4-phenylindenyl zirconium dichloride as bridged isospecific compound and diphenylsilylene (cyclopentadienyl)(fluorenyl) zirconium dichloride as syndiospecific compound) in an aromatic solvent is added at this temperature.

After recovering the resulting supported metallocene catalyst, it is washed with a paraffinic hydrocarbon solvent at a temperature of 10°C or less and subsequently dispersed in a viscous mineral oil.

Until now there have always been the problems of poor morphology of the catalyst, an uneven distribution of the substances on the support and thus also a poor quality of the polymer particles and a low catalyst activity.

Accordingly, although much development work has been done in the field of metallocene catalysts, there remains a continuing search for alternative or improved metallocene catalysts of high purity and homogeneity which exhibit high activity and high productivity.

It was therefore an object of the invention to provide improved metallocene catalysts of high purity and homogeneity which exhibit high activity and high productivity.

This object was achieved by a combination of using special metallocene complexes and a special way of producing the supported catalysts.

Thus in a first aspect, the present invention is therefore directed to a supported, high purity catalyst composition with improved properties for producing polyolefins comprising

a) an alumoxane-impregnated support prepared by contacting an alumoxane with silica as an inert carrier material and heating to a temperature from 50°C to 100°C and
b) a metallocene compound of formula I

$$(Cp)_2 MX_2 \ (I)$$

wherein both Cp are an optionally substituted or an optionally fused homo- or heterocyclopentadienyl ligand;

M is Zr or Hf;
and both X are $-CH_2-Y$, wherein Y is $C_{6-20}$-aryl, $C_{6-20}$-heteroaryl, $C_{1-20}$-alkoxy, $C_{6-20}$-aryloxy, $-NR_2$, $-SiR_3$ or $OSiR_3$, R being a $C_{1-20}$ hydrocarbyl or in case of $-NR_2$, the two substituents R can form a ring together with the nitrogen atom wherein they are attached to.

In the formula (I) both Cp are an optionally substituted or an optionally fused homo-or heterocyclopentadienyl ligand, e.g. a substituted or unsubstituted cyclopentadienyl, a substituted or unsubstituted indenyl or a substituted or unsubstituted fluorenyl ligand.

Said optional substituent(s) present on the Cp group are selected from halogen, hydrocarbyl (e.g. $C_{1-20}$-alkyl, $C_{2-20}$-alkenyl, $C_{2-20}$-alkynyl, $C_{3-12}$-cycloalkyl, $C_{6-60}$-aryl or $C_{7-20}$-arylalkyl), $C_{3-12}$-heterocycloalkyl, $C_{5-20}$-heteroaryl, $C_{1-20}$-haloalkyl, $-NR'_2$, $-SiR'_3$ or $OSiR'_3$, R' being a $C_{1-20}$ hydrocarbyl (e.g. $C_{1-20}$-alkyl, $C_{2-20}$-alkenyl, $C_{2-20}$-alkynyl, $C_{3-12}$-cycloalkyl or $C_{6-20}$-aryl) or in case of $-NR'_2$, the two substituents R' can form a ring together with the nitrogen atom wherein they are attached to.

Cp preferably denotes cyclopentadienyl, indenyl, tetrahydroindenyl or fluorenyl, optionally substituted as defined above. More preferably Cp denotes cyclopentadienyl or tetrahydroindenyl.

In a preferred embodiment both Cp groups remain unsubstituted or are both substituted with the same number and kind of substituent.

Preferred substituents include $C_{1-20}$-alkyl, $C_{6-20}$-aryl or $C_{7-20}$-arylalkyl.

Especially preferably the Cp groups are unsubstituted or carry both a $C_{1-6}$-alkyl substituent such as methyl, ethyl, isopropyl or n-butyl.

M is Zr or Hf, especially preferably Hf.

Preferably both Y are selected from $C_{6-20}$-aryl, $-NR_2$, $-SiR_3$ or $OSiR_3$, where R is defined as above.

More preferably $-CH_2-Y$ is benzyl or $-CH_2-SiR_3$, with R being $C_{1-6}$-alkyl or $C_{6-10}$-aryl.

Particularly preferred are the following compounds:

Bis(n-butylcyclopentadienyl)Hf dibenzyl,
Bis(methylcyclopentadienyl)Hf dibenzyl,
Bis(1,2-dimethylcyclopentadienyl)Hf dibenzyl,
Bis(n-propylcyclopentadienyl)Hf dibenzyl,

Bis(i-propylcyclopentadienyl)Hf dibenzyl,
Bis(1,2,4-trimethylcyclopentadienyl)Zr dibenzyl,
Bis(tetrahydroindenyl)Zr dibenzyl,
Bis(n-butylcyclopentadienyl)Hf $(CH_2SiMe_3)_2$,
Bis(n-propylcyclopentadienyl)Hf $(CH_2SiMe_3)_2$,
Bis(i-propylcyclopentadienyl)Hf $(CH_2SiMe_3)_2$
Bis(1,2,4-trimethylcyclopentadienyl)Zr$(CH_2SiMe_3)_2$,

Most preferred compound is Bis(n-butylcyclopentadienyl)Hf dibenzyl.

The preparation of the metallocenes used according to the invention can be carried out accordingly or analogously to methods known from the literature and is within skills of a person skilled in the field.
The metallocene compounds of formula I can be produced for example as described in EP 1 462 464.

The catalyst composition of the invention further comprises an alumoxane-impregnated support prepared by contacting an alumoxane or a modified alumoxane with silica as an inert carrier material
There are a variety of methods for preparing alumoxane and modified alumoxanes, non-limiting examples of which are described in U.S. Patent No. 4,665,208, 4,952,540, 5,091,352, 5,206,199, 5,204,419, 4,874,734, 4,924,018, 4,908,463, 4,968,827, 5,308,815, 5,329,032, 5,248,801, 5,235,081, 5,157,137, 5,103,031, 5,391,793, 5,391,529, 5,693,838, 5,731,253, 5,731,451 5,744,656 and European publications EP-A-0 561 476, EP-B1-0 279 586 and EP-A-0 594-218, and WO 94/10180, all of which are herein fully incorporated by reference.
Preferably, alumoxanes, particularly methylalumoxane or modified methylalumoxane, isobutylalumoxane, e.g. TIBAO (tetraisobutylalumoxane) or HIBAO (hexaisobutylalumoxane) are used to impregnate the support.
More preferably methylalumoxane (MAO) is used.

The mole ratio of the Al of the alumoxane component to the metal of the single site catalyst is in the range of between 0.3:1 to 2000:1, preferably 20:1 to 800:1, and most preferably 50:1 to 500:1.

According to the invention silica is used as inert carrier.
The surface area, pore volume and particle size of the silica can be chosen according to the requirements of the specific polymerization process, in which the catalysts will be used. Typically, silica particles having a surface area in the range of from about 10 to about 700 $m^2$/g (BET method), pore volume in the range of from about 0.1 to about 6.0 $cm^3$/g and average particle size in the range of from about 10 to about 500 $\mu$m can be used.
The silica may be in granular, agglomerated, fumed or other form.

It is further preferred that the carrier material is calcinated, i.e. heat treated under air and then with a non-reactive gas such as nitrogen. This treatment is preferably done at a temperature in excess of 100 °C, more preferably 200 °C or higher, e.g. 200-800 °C, particularly about 600 °C. The calcination treatment is preferably effected for several hours, e.g. 2 to 30 hours, more preferably about 10 hours.

The alumoxane-impregnated support is obtained by contacting an alumoxane with silica and heating to a temperature from 50°C to 100°C.
This alumoxane-containing silica is used as support for the metallocene of the formula (I).
Preferably the alumoxane-impregnated support contains less than 15.0 wt% of aluminium, more preferably 9.0 to 14.5 wt% and most preferably 10.0 to 14.0 wt% of aluminium, based on the total weight of the support material and alumoxane.

The catalyst is preferably loaded onto the support material at from 0.05 to 4%, preferably 0.1 to 3.0%, especially 0.2 to 2.0%, by weight of active metal relative to the dry weight of the support material.

The obtained catalyst composition of the invention has surprising properties and combination of properties, which are not achieved by the catalysts known from the state of the art, like excellent morphology. The obtained catalyst further has a desired bigger average particle size (APS), leading to a bigger average particle size of the polymer produced.
Furthermore, the final catalyst of the invention exhibits high catalytic activity and the polymer product produced therewith has i.e. a decreased amount of fines (i.e. particles with size < 100 $\mu$m), respectively decreased ash content compared to product produced with catalysts known from the state of the art. These special supported metallocene compositions are highly homogeneous and pure and show beside high activity also high productivity. Furthermore they reduce the problem of reactor fouling.

In accordance with this invention there is further provided a process for preparing said improved supported catalyst composition with improved activity and productivity which comprises the following steps of

a) preparing a mixture of a $SiO_2$ support and an alumoxane in an aromatic hydrocarbon solvent
b) heating said mixture to 50°C to 100°C
c) cooling the mixture to room temperature (e.g. to 15 - 30°C)
d) optionally drying
e) preparing a mixture of a metallocene of the formula (I) and an aromatic or aliphatic hydrocarbon solvent,
f) reacting the mixture of e) with the mixture of c) respectively d) at room temperature (e.g. 15 to 30°) and

g) drying the so obtained catalyst composition.

All steps are done under an inert atmosphere.

Step a):

The support material, which is $SiO_2$, is added to the alumoxane, preferably dissolved in an aromatic solvent or a solution of alumoxane is added to the $SiO_2$.
$SiO_2$ can be used as such in dry form or slurried in an aromatic solvent.

Suitable aromatic solvents are benzene, toluene, xylene and other alkyl or halogen substituted aromatic compounds. Preferably toluene is used.
The amount of the solvent used is less than the pore volume (ml/g) of the support up to less than 5 times the pore volume. Preferred ranges' being from 1.1 times to 3.5 times the pore volume and most preferably 1.2 to 3 times the pore volume. Procedures for measuring the total pore volume of a porous support are well known in the art. Details of one of these procedures are discussed in Volume 1, Experimental Methods in Catalytic Research (Academic Press, 1968) (specifically see pages 67-96). This preferred procedure involves the use of a classical BET apparatus for nitrogen absorption. Another method well known in the art is described in Innes, Total Porosity and Particle Density of Fluid Catalysts By Liquid Titration, Vol. 28, No. 3, Analytical Chemistry 332-334 (March, 1956).

The contact time and temperature in step a) are not critical. Preferably the temperature is from 0°C to 60°C, more preferably from 10°C to 40°C and most preferably from 20°C to 30°C.
The contact time is preferably from 15 min to 40 hours, more preferably from 1 hour to 20 hours.

As already stated above the support is preferably calcinated before step a).

Step b):

The alumoxanes/$SiO_2$ mixture is then heated to 50 to 100°C, preferably to 60 to 90°C and more preferably to 70 to 80°C.
The heating is done under preferably constant stirring.
The contact time is between 30 min up to 15 hours, preferably 40 min up to 12 hours and more preferably 1 hour up to 10 hours.
By means of preliminary experiments, a person skilled in the art will be able to define the heat treatment conditions that will provide the desired result (i.e. fixing of the alumoxanes on the support to such a high degree that subsequent washing steps can be omitted)
Gases formed during this reaction are allowed to escape from the reaction mixture.

Step c)

In step c) the alumoxanes/$SiO_2$ mixture is allowed to cool down to room temperature, e.g. 15 to 30°C, preferably 20 to 25°C.
Cooling is preferably done under stirring.

Step d)

The alumoxanes/$SiO_2$ mixture can be optionally dried after step c) by conventional methods as for example by flushing with nitrogen, by using a vacuum or a combination therefrom. The temperature used and the drying time is depending on the drying technique used.

Step e)

Now a mixture of a metallocene of the formula (I) and an aromatic or aliphatic hydrocarbon solvent is prepared. Suitable solvents for this step are again aromatic solvents like benzene, toluene, xylene and other alkyl or halogen substituted aromatic compounds. Preferably toluene is used.
Furthermore also aliphatic hydrocarbon solvents like pentane can be used.
Preferably the same solvent as used in step a) is used.
The amount of the solvent used is less than the pore volume (ml/g) of the support up to less than 5 times the pore volume. Preferably the amount of the solvent used is less than the pore volume (ml/g) of the support up to 3.5 times the pore volume.

The contact time and temperature in step e) are not critical. Preferably the temperature is from 10°C to 60°C, more preferably from 15°C to 45°C and most preferably from 20°C to 30°C. The contact time is preferably from 5 min to 40 hours, more preferably from 0.5 hour to 20 hours.

Step f)

The mixture of e) is then reacted with the mixture of c) respectively d) at room temperature (e.g. 15 to 30°) for 30 min up to 24h.
Preferred reaction times are 1 h up to 10 hours; more preferred 1.5 h up to 5 hours.
The reaction mixture is preferably stirred during the reaction.

Step g)

At last the so obtained catalyst composition is dried. Drying can be done by any suitable technique, such as applying heat and/or reduced pressure, evaporation, nitrogen flushing with partial vacuum or suction.
Time and temperature for drying is depending on the drying technique used. If heat is applied, the temperature should not exceed the decomposition temperature of the metallocene used.
Preferably the catalyst composition is dried at 20 to 75°C, preferably at 40 to 70°C, for 2h up to 24 h, preferably for 3h up to 16h, more preferably for 4 to 8 hours.
The so produced catalyst composition can be used directly for the production of polyolefin homo - or copolymers. The present supported catalyst does not require additional activators or co-catalysts; nevertheless it is possible to combine the supported catalyst with additives commonly used in polymerization processes, like impurity scavengers, anti-fouling agents or the like.
If desired the catalyst may be prepolymerized before the main polymerization step.
The prepolymerization can be carried out batch-wise or continuously in gas, solution or slurry phase including at elevated pressures. The prepolymerization can take place with any olefin monomer or combination and/or in the presence of any molecular weight controlling agent such as hydrogen. For examples of prepolymerization procedures, see U.S. Patent Nos. 4,748,221, 4,789,359, 4,923,833, 4,921,825, 5,283,278 and 5,705,578 and European publication EP-B-0279 863 and PCT Publication WO 97/44371 all of which are herein fully incorporated by reference.
The catalyst system according to the invention has an improved activity and productivity compared to catalysts known from the state of the art.
The present catalyst system is suitable for the production of polyolefin homo- or copolymers, like polypropylene homopolymers and any copolymers thereof or preferably polyethylene homopolymers and any copolymers thereof.
With the catalyst system according to the invention it is further possible to produce different kinds of polyethylene, like low density polyethylene (LDPE), medium density polyethylene (MDPE) and high density polyethylene (HDPE) in the gas phase or in a slurry polymerization without reactor fouling.
Furthermore the catalyst system according to the invention is highly homogeneous.
Catalyst homogeneity is very critical for several applications like PE-film. Inhomogenity of the catalyst can easily cause catalyst gels which are seen as tiny dots in final blown film.
Thus, viewed from another aspect, the invention provides polyolefins like propylene or ethylene homo - or copolymers produced by using the special improved supported catalyst composition and their use, as for example for producing blown films or for rotomoulding.
Suitable polyolefins comprise polyethylene and polypropylene homopolymers and also polyethylene, polypropylene and polypropylene/ethylene copolymers comprising from 0 to 20 wt % $C_3$ to $C_{30}$-alpha-olefin or $C_4$ to $C_{30}$-diene-derived units, and more particularly a copolymer or terpolymer of ethylene and/or propylene with 0 to 10 wt % alkenes, for example 1-propene, 1-butene, 1-pentene, 4-methyl-pent-1-ene, 1-hexene, cyclohexene, 1-octene and norbornene, or dienes, for example butadiene, hexadiene or octadiene.
In a preferred embodiment the polyolefins produced by using the special improved supported catalyst composition are ethylene homopolymers or ethylene copolymers or terpolymers with a $C_3$-$C_8$-alpha olefin, e.g. propylene, 1-butene or 1-hexene.
In a further preferred embodiment polyethylene compositions contain as comonomers 0 to 20 wt % $C_3$ to $C_{30}$-alpha-olefins, preferably $C_3$ to $C_{10}$-alpha-olefins, more preferably $C_3$ to $C_6$-alpha-olefins, and most preferably butene or hexene, or mixtures thereof.
The ethylene homopolymer and copolymer compositions of the invention have a density in the range of about 860 kg/m$^3$ to about 970 kg/m$^3$, preferably about 880 to 960 kg/m$^3$, more preferably between about 900 to about 955 kg/m$^3$ and most preferably between about 910 to 950 kg/m$^3$.
Furthermore polyethylene composition produced in the presence of the catalyst system of the present invention can be characterized by a weight average molecular weight (Mw) from 60 000 to about 350 000 g/mol, a number average molecular weight (Mn) of from 10 000 to about 150 000 g/mol and a MFR$_2$ (2.16kg/190°C) of 0.1 to 400 g/10 min.
The polyolefin composition further can show unimodal, bimodal or multimodal molecular weight distribution.

Bimodal or multimodal polyolefins can be produced in dual or multi-stage and -reactor processes which are known in the art and for example are described by F. P. Alt et al. in 163 MACROMOL. SYMP., 135-143 (2001) and 2 METALLOCENE-BASED POLYOLEFINS 366-378 (2000); and U.S. Pat. No. 6 407 185, U.S. Pat. No. 4 975 485, U.S. Pat. No. 4 511 704 or in single reactors with the use of a plurality of catalysts.

Any method of olefin polymerization - for example, a gas phase, slurry phase, solution polymerization process or any combinations thereof - that is known for the polymerization of olefins to form polyolefins in combination with the catalysts system of the invention can be used.

Polymerization can be a one stage or a two or multistage polymerisation process, carried out in at least one polymerisation reactor. Multimodal polymers with respect to the molecular weight distribution (MWD) are produced in a multistage process, where low molecular weight and higher molecular weight polymers are produced in different polymerisation steps, in any order. Different combinations for producing multimodal polymers can be used, e.g. gas-gas phase, slurry-slurry phase, slurry-gas phase processes; slurry-gas phase polymerisation being a preferred one. Unimodal polymers can be produced in a one stage polymerisation, although more then one stage is possible, but then polymers with approximately the same molecular weight are produced in each stage. Any type of polymerisations as listed above are possible, however, slurry process being one preferred process.

In addition to the actual polymerisation the process configuration can comprise any pre- or post reactors.

The catalyst composition may be introduced into the polymerization reactor by any suitable means regardless of the type of polymerization reactor used. In one embodiment, the catalyst composition is fed to the reactor in a substantially dry state, meaning that the isolated solid form of the catalyst has not been diluted or combined with a diluent prior to entering the reactor. In another embodiment, the catalyst composition is combined with a diluent and fed to the reactor; the diluent in one embodiment is an alkane, such as a $C_4$ to $C_{20}$-alkane, toluene, xylene, mineral or silicon oil, or combinations thereof, such as described in, for example, U.S. Pat. No. 5 290 745. Generally the quantity of catalyst used will depend upon the nature of the catalyst, the reactor types and conditions and the properties desired for the polymer product. Conventional catalyst quantities, such as described in the publications referred herein, may be used.

The reactor setup not particularly limited and can be any reactor setup known to the skilled person. Suitable types of reactors and means for operating the reactors are for example described in U.S. Pat. Nos. 4 003 712, 4 588 790, 4 302 566, 5 834 571, 5 352 749, 5 352 749 and 5 462 999, which are all fully incorporated herein by reference.

For slurry reactors, e.g. loop reactors, the reaction temperature will generally be in the range of 50 to 110°C (e.g. 60 -100, or 70 to 110°C), the reactor pressure will generally be in the range of 20 to 80 bar (e.g. 30-70 bar), and the residence time will generally be in the range of 0.3 to 5 hours (e.g. 0.5 to 2 hours). The diluent used will generally be an aliphatic hydrocarbon having a boiling point in the range -70 to +100°C. In such reactors, polymerization may if desired be effected under supercritical conditions.

For gas phase reactors, the reaction temperature used will generally be in the range of 50 to 130°C (e.g. 60 to 115°C, or 60 to 100°C), the reactor pressure will generally be in the range of 5 to 60 bar, preferably 10 to 40 bar and the residence time will generally be 1 to 8 hours. The gas used will commonly be a non-reactive gas such as nitrogen together with monomer.

Hydrogen may be introduced into a reactor to control the molecular weight of the polymer as is well-known and routine in the art. In one embodiment, the mole ratio of hydrogen to total olefin monomer in the circulating gas stream is in a range of from 0.001 or 0.002 or 0.003 to 0.014 or 0.016 or 0.018 or 0.024, wherein a desirable range may comprise any combination of any upper mole ratio limit with any lower mole ratio limit described herein. Expressed another way, the amount of hydrogen in the reactor at any time may range from 1000 ppm to 20,000 ppm in one embodiment, and from 2000 to 10,000 in another embodiment, and from 3000 to 8,000 in yet another embodiment, and from 4000 to 7000 in yet another embodiment, wherein a desirable range may comprise any upper hydrogen limit with any lower hydrogen limit described herein.

The invention therefore also provides a process for producing a polymer composition comprising at least (i) an alpha-olefin homo- or copolymer component as defined above, wherein alpha-olefin monomers, optionally together with one or more comonomers, are polymerized in the presence of the special catalysts composition according to the invention. In case the polymer composition consists of component (i) the process is a single stage process.

The invention further provides a process for producing a polymer composition comprising at least two different alpha-olefin homo- or copolymer components (i) and (ii) as defined above or in claims below, wherein each component is produced by polymerizing alpha-olefin monomers, optionally together with one or more comonomers, in the presence of a polymerization catalyst in a multistage polymerization process using one or more polymerization reactors, which may be the same or different, e.g. at least loop-loop, gas-gas or any combination of loop and gas. Each stage may be effected in parallel or sequentially using same or different polymerization method. In case of a sequential stages each components, e.g. (i) and (ii), may be produced in any order by carrying out the polymerization in each step, except the first step, in the presence of the polymer component formed, and preferably the catalyst used, in the preceding step. Alternatively, the same or different catalyst can be added in the subsequent step(s).

In one embodiment the process for producing any of the above polymer composition comprising (i) an alpha-olefin homopolymer or copolymer component and, optionally, (ii) an alpha-olefin homopolymer or copolymer component includes the steps of:

(a) polymerizing in a slurry reactor zone, preferably a loop reactor, alpha-olefin monomers, optionally together with one of more comonomers, in the presence of the catalyst composition according to the invention to produce polymer component (i), and

(b) optionally transferring the reaction product of step (a) to a subsequent gas phase reactor zone and polymerizing alpha-olefin monomers, optionally together with one or more comonomers, in the presence of the reaction product of step (a) to produce polymer component (ii) for obtaining the polymer composition, and

(c) recovering the obtained composition.

A preferred multistage process is a "loop-gas phase"-process, such as developed by Borealis A/S, Denmark (known as BORSTAR® technology) described e.g. in patent literature, such as in EP 0887 379, in WO92/12182 or in WO 2005/002744.

The polymer compositions produced according to the invention can be used for a great variety of applications, like for blown films or for rotomoulding.

**METHODS:**

**Molecular weights, molecular weight distribution (Mn, Mw, MWD) - GPC**

The weight average molecular weight Mw and the molecular weight distribution (MWD = Mw/Mn wherein Mn is the number average molecular weight and Mw is the weight average molecular weight) was measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methyl-phenol) as solvent at 145 °C and at a constant flow rate of 1 mL/min. 216.5 $\mu$L of sample solution were injected per analysis. The column set was calibrated using relative calibration with 19 narrow MWD polystyrene (PS) standards in the range of 0.5 kg/mol to 11 500 kg/mol and a set of well characterized broad polypropylene standards. All samples were prepared by dissolving 5 - 10 mg of polymer in 10 mL (at 160 °C) of stabilized TCB (same as mobile phase) and keeping for 3 hours with continuous shaking prior sampling in into the GPC instrument.

The **melt flow rates** were measured with a load of 2.16 kg and at 190°C. The melt flow rate ($MFR_2$) is that quantity of polymer in grams which the test apparatus standardized to ISO 1133 extrudes within 10 minutes at a temperature of 190°C under a weight of 2.16 kg.

**Density** was determined according to ISO 1183-1987on compression-moulded specimens

**Al and Hf determination**

The elemental analysis of a catalyst was performed by taking a solid sample of mass, M, cooling over dry ice. Samples were diluted up to a known volume, V, by dissolving in nitric acid ($HNO_3$ 65 %, 5 % of V) and freshly deionised (DI) water (5 % of V). The solution was then added to hydrofluoric acid (HF, 40 %, 3 % of V), diluted with DI water up to the final volume, V, and left to stabilise for two hours. The analysis was run at room temperature using a Thermo Elemental IRIS Advantage XUV Inductively Coupled Plasma - Atomic Excitation Spectrometer (ICP-AES) which was calibrated immediately before analysis using a blank (a solution of 5 % $HNO_3$ 3 % HF in DI water), a low standard (10 ppm Al in a solution of 5 % $HNO_3$ 3 % HF in DI water), a high standard (50 ppm Al, 50 ppm Hf, 20 ppm Zr in a solution of 5 % $HNO_3$ 3 % HF in DI water) and a quality control sample (20 ppm Al, 20 ppm Hf, 10 ppm Zr in a solution of 5 % $HNO_3$ 3 % HF in DI water). The content of hafnium was monitored using the 282.022 nm and 339.980 nm lines, the content of aluminium via the 167.081 nm line. The reported values, required to be between 0 and 100, or further dilution is required, are an average of three successive aliquots taken from the same sample and are related back to the original catalyst using equation 1.

$$C = \frac{R \times V}{M} \qquad \text{Equation 1}$$

Where: C is the concentration in ppm, related to % content by a factor of 10,000
R is the reported value from the ICP-AES
V is the total volume of dilution in ml
M is the original mass of sample in g

If dilution was required then this also needs to be taken into account by multiplication of C by the dilution factor.

**Ash content of polyolefins**

Measurement of ash content of polyolefins is based on ISO 3451-1 and covers the determination of the total inorganic material in polymer samples by pyrolysis.

A clean crucible is heated in the muffle furnace at the test temperature until constant mass is reached, whereafter the crucible is allowed to cool to room temperature for at least 30 min in a desiccator. The crucible is weighted to the nearest 0.1 mg, and into the crucible a test portion of the sample is introduced according to the following table: Estimated ash content:

| Sample size: | | |
|---|---|---|
| | ≥0.05% | 10±0.1 g |
| | 0.01-0.05% | 20±0.1g |
| | <0.01 % | 30±0.1g |

Sample is weighed to the nearest 0.1 mg. The quantity should not exceed half of the crucible volume but it should be sufficient to yield 5-50 mg of ash.

The crucible is heated on the burner so that the material starts to burn. The burning must not be too vigorous to avoid loss of ash particles. The burning continues without heating until the whole test portion has been burned.

The crucible is transferred into the muffle oven and calcined for 30 min at about 750 °C. After that it is placed in the desiccator, and is allowed to cool to room temperature for 30 min. The crucible is weighted with 0.1 mg accuracy

Ash content: is calculated from the following formula

$$ash \ (ppm) \ = \ \frac{M1 \ - \ M2}{W} \ x \ 1000 \ 000$$

where:

M1 = crucible with ash (g)
M2 = crucible (g)
W = mass of the sample (g)

The results are expressed with an accuracy of 10 ppm.

**Average particle size (APS)** was determined by sieving the polymer powder according to ASTM D1921-06. The screen set consisted of screens having openings of 4.000 mm, 2.000 mm, 0.850 mm, 0.355 mm, 0.250 mm and 0.106 mm.

The **fines** were determined by sieving the polymer powder according to ASTM D1921-06. The powder passing the 0.250 mm screen was considered as fines.

The **catalyst productivity** is defined as the amount of polymer in kilograms obtained per gram solid catalytic component used (e.g. kg PE/ g catalyst).

The **activity** of the catalyst is defined as the amount of polymer produced by a specified catalyst amount in a specified time (e.g. kg PE/(g catalyst.h)).

**EXAMPLES:**

**Example 1: metallocene complex preparation:**

The catalyst complex used in the polymerisation examples was bis(n-butyl cyclopentadienyl)hafnium dibenzyl, (n-BuCp)$_2$Hf(CH$_2$Ph)$_2$, and it was prepared according to "Catalyst Preparation Example 2" of WO2005/002744, starting from bis(n-butyl cyclopentadienyl)hafnium dichloride (supplied by Witco).

All catalyst (examples 2-4) preparations were made in a 160 L batch reactor into which a metallocene complex solution was added. Mixing speed was 40 rpm during reaction and 20 rpm during drying. Reactor was carefully flushed with toluene prior to reaction and inertized with nitrogen after silica addition

**Example 2: Preparation of catalyst composition according to the invention**

10.0 kg activated silica (commercial silica carrier, XP02485A, having an average particle size 20$\mu$m, supplier: Grace) were first slurried into 21.7 kg dry toluene at room temperature. Then the silica slurry was added to 14.8 kg of 30 wt% methylalumoxane in toluene (MAO, supplied by Albemarle) during 3 hours. Afterwards the MAO/silica mixture is heated to 79°C for 6 hours and then cooled down to room temperature again.
The resulting solution was reacted with 0.33 kg of (n-BuCp)$_2$Hf(CH$_2$Ph)$_2$ in toluene (67,9 wt%) for 8 hours at room temperature.
The catalyst was dried under nitrogen purge for 5.5 hours at 50°C.
The obtained catalyst had an Al/Hf mol-ratio of 200, an Hf-concentration of 0.44 wt% and an Al-concentration of 13.2 wt%.

**Example 3: Comparative Example A**

A complex solution of 3,6 kg toluene, 0.28 kg (n-BuCp)$_2$Hf(CH$_2$Ph)$_2$ in toluene (67,9 wt%) and 12.4 kg 30 wt% methylalumoxane in toluene (MAO, supplied by Albemarle) was prepared. Precontact time was 120 minutes. The resulting complex solution was added slowly onto 10.0 kg activated silica (commercial silica carrier, XPO2485A, having an average particle size 20$\mu$m, supplier: Grace). Contact time was 2 h at 24°C. The catalyst was dried under nitrogen purge for 7 h at 50°C. The obtained catalyst had an Al/Hf ratio of 200 mol/mol; a Hf-concentration of 0.33 wt% and an Al-concentration of 11.1 wt%.

**Example 4: Comparative Example B**

16.4 kg methylalumoxane in toluene (30 weight-%, supplied by Albemarle) was mixed with 8.5 kg dry toluene and added to 0.46 kg di(n-benzyl)di(n-butylcyclopentadienyl)hafnium in toluene (67,9 wt%) and stirred at room temperature for 20 min. The obtained solution was added dropwise during 45 min to 10 kg activated silica (commercial silica carrier, XPO2485A, having an average particle size 20$\mu$m, supplier: Grace) and stirred at room temperature for 3 hours. The solvents were evaporated off under nitrogen flow at 50 °C to obtain the supported catalyst. The obtained catalyst had an Al/Hf ratio of 200 mol/mol; a Hf-concentration of 0.42 wt% and an Al-concentration of 14.0 wt%.

**Example 5: Copolymerisation of ethylene and 1-hexene; Unimodal:**

Polymerisations were carried out in a Büchi 5 L stainless steel autoclave reactor equipped with a paddle stirrer and a continuous supply of ethylene. Ethylene (>99.95%), nitrogen (>99.999%) and isobutane (>97%), 1-hexene (>99%) are further treated with sets of purifiers removing selectively O$_2$, H$_2$O, CO, CO$_2$ and acetylene.
An appropriate amount of the catalysts prepared according to Examples 2 - 4 was charged to a feeding vessel in glove box and the catalyst solution transferred to the stirred (400 min$^{-1}$) reactor. The autoclave is purged with nitrogen and charged with 2500 mL of isobutane at room temperature, followed by the addition of the catalyst from a catalyst feeding funnel with additional 1000 mL isobutane. The reactor was then heated to +85°C, after which the polymerisation was started by adding a first portion of 1-hexene in one batch using continuous feed of ethylene. Afterwards a continuous feed of 1-hexene and hydrogen was adjusted. The ethylene feed was then used to adjust the reactor pressure to the targeted value. The ethylene partial pressure was 7 bars.
Further parameters of the polymerization process and of the unimodal polyethylene copolymer can be seen from Table 1:

Table 1:

| CATALYST from | EXAMPLE 2 | EXAMPLE 3 | EXAMPLE 4 |
|---|---|---|---|
| Cat. amount (mg) | 347 | 419 | 396 |
| C$_2$ pressure (bar) | 7 | 7 | 7 |
| C$_6$ batch feed (ml) | 14.2 | 14.5 | 14.3 |
| C$_6$ cont. feed (mol/kmol) | 20 | 20 | 20 |
| H$_2$ cont. feed (mol/kmol) | 1.1 | 1.1 | 1.1 |

(continued)

| CATALYST from | EXAMPLE 2 | EXAMPLE 3 | EXAMPLE 4 |
|---|---|---|---|
| Residence time (min) | 31 | 48 | 40 |
| Yield (g) | 420 | 345 | 336 |
| Activity (kg/g cat/h) | 2.3 | 1.0 | 1.27 |
| Density (kg/m$^3$) | 926.6 | 931.3 | 932.3 |
| MFR$_2$ (g/10min) | 0.89 | 0.94 | 1.00 |
| Mn | 43200 | 38800 | 32200 |
| Mw | 144000 | 139000 | 132000 |
| MWD | 3.3 | 3.6 | 4.1 |
| 1-hexene (wt%) | 3.9 | 2.9 | 3.3 |

From Table 1 it can be easily seen that with the catalyst composition according to the invention the activity as well as the productivity have been increased significantly.

## Example 6: Bimodal polyethylene

Polymerization was carried out in a pilot plant comprising a loop reactor having a volume of 500 dm$^3$ and one fluid bed gas-reactors having a volume of 750 dm$^3$ connected in series analogous to Example 1 of WO 2005/002744.

Thus, propane diluent, ethylene, but-1-ene comonomer, hydrogen and a catalyst prepared according to Examples 2 - 4 were introduced into the loop reactor, which was operated at 85°C temperature and 60 bar pressure.

The thus formed polymer slurry was intermittently withdrawn from the reactor by using a settling leg and directed to a flash tank operated at a temperature of about 50°C and a pressure of about 3 bars.

From the flash tank the powder, containing a small amount of residual hydrocarbons, was transferred into the gas phase reactor operated at 75°C respectively 70°C temperature and 20 bar pressure. Into the gas phase reactor were also introduced additional ethylene, hex-1-ene and but-1-ene comonomer and nitrogen as inert gas.

Further parameters of the polymerization process and of the bimodal polyethylene copolymer can be seen from Table 2:

Table 2:

| CATALYST from | Example 2 | Example 3 | Example 3 | Example 4 |
|---|---|---|---|---|
| A) LOOP | | | | |
| Cat. amount (g/h) | 18 | 35 | 37 | 27 |
| C$_2$ concentration (mol%) | 7.1 | 6.4 | 5.1 | 6.0 |
| H$_2$/C$_2$ ratio (mol/kmol) | 0.47 | 0.57 | 0.48 | 0.49 |
| C$_4$/C$_2$ ratio (mol/kmol) | 110 | 115 | 177 | 140 |
| Production rate kg/h | 36 | 29 | 34 | 35 |
| Productivity (kg/g) | 2.0 | 0.8 | 0.9 | 1.3 |
| Split | 48 | 50 | 49 | 50 |
| MFR2 (g/10min) | 110 | 197 | 140 | 131 |
| Density (kg/m$^3$) | 933 | 936 | 935 | 936 |
| Ash content (ppm) | 580 | 940 | 1000 | 755 |
| Fines wt% | 3.6 | 11.4 | 4.5 | 2.4 |
| APS (mm) | 0.34 | 0.25 | 0.26 | 0.30 |
| B) GPR | | | | |

(continued)

| CATALYST from | Example 2 | Example 3 | Example 3 | Example 4 |
|---|---|---|---|---|
| Temperature | 75 | 75 | 70 | 70 |
| $C_2$ concentration (mol%) | 54 | 55 | 52.3 | 44.8 |
| $H_2/C_2$ ratio (mol/kmol) | 1.3 | 1.0 | 0.8 | 0.9 |
| $C_4/C_2$ ratio (mol/kmol) | 16 | 17 | 15.2 | 15 |
| $C_6/C_2$ ratio (mol/kmol) | 18 | 20 | 17 | 16 |
| Production rate (kg/h) | 38.4 | 28.1 | 35.2 | 37.1 |
| Productivity (kg/g) Overall | 4.2 | 1.6 | 1.8 | 2.7 |
| $MFR_2$ (g/10min) | 21 | 13 | 12 | 13 |
| Density (kg/m$^3$) | 914 | 911 | 917 | 916 |
| Fines (wt%) | 0.1 | 0.3 | 0.3 | 0.3 |
| APS (mm) | 0.54 | 0.41 | 0.40 | 0.41 |

**Claims**

1. Supported, high purity catalyst composition with improved properties for producing polyolefins comprising

   a) an alumoxane-impregnated support prepared by contacting an alumoxane with silica as an inert carrier material and heating to a temperature from 50°C to 100°C and
   b) a metallocene compound of formula I

   $$(Cp)_2MX_2 \qquad (I)$$

   wherein both Cp are an optionally substituted or an optionally fused homo- or heterocyclopentadienyl ligand;

   M is Zr or Hf;
   and both X are -$CH_2$-Y, wherein Y is $C_{6-20}$-aryl, $C_{6-20}$-heteroaryl, $C_{1-20}$-alkoxy, $C_{6-20}$-aryloxy, -$NR_2$, -$SiR_3$ or $OSiR_3$,
   R being a $C_{1-20}$ hydrocarbyl or in case of -$NR_2$, the two substituents R can form a ring together with the nitrogen atom wherein they are attached to.

2. Catalyst composition according to claim 1, **characterized in that** Cp of the metallocene of formula (I) denotes cyclopentadienyl, indenyl, tetrahydroindenyl or fluorenyl, both Cp optionally substituted with the same number and kind of substituents selected from the group of $C_{1-20}$-alkyl, $C_{6-20}$-aryl or $C_{7-20}$-arylalkyl and X denotes benzyl or -$CH_2$-$SiR_3$, with R being $C_{1-6}$-alkyl or $C_{6-10}$-aryl.

3. Catalyst composition according to claim 1 or 2, **characterized in that** the metallocene compound of formula (I) is selected from the group of bis(n-butylcyclopentadienyl)Hf dibenzyl, bis(methylcyclopentadienyl)Hf dibenzyl, bis(1,2-dimethylcyclopentadienyl)Hf dibenzyl, bis(n-propylcyclopentadienyl)Hf dibenzyl, bis(i-propylcyclopentadienyl)Hf dibenzyl, bis(1,2,4-trimethylcyclopentadienyl)Zr dibenzyl, bis(tetrahydroindenyl)Zr dibenzyl, bis(n-butylcyclopenta-dienyl)Hf ($CH_2SiMe_3$)$_2$, bis(n-propylcyclopentadienyl)Hf ($CH_2SiMe_3$)$_2$, bis(i-propylcyclopentadienyl)Hf ($CH_2SiMe_3$)$_2$ and bis(1,2,4-trimethylcyclo-pentadienyl)Zr-($CH_2SiMe_3$)$_2$.

4. Catalyst composition according to anyone of the preceding claims 1 to 3, comprising an alumoxane-impregnated silica support, whereby the alumoxane is selected from the group of methylalumoxane, tetraisobutylalumoxane and hexaisobutylalumoxane and the aluminium content of the impregnated support being less than 15.0 wt%, based on the total weight of support material and alumoxanes.

5. Process for the preparation of the catalyst composition according to anyone of the preceding claims 1 to 4 comprising the steps of

a) preparing a mixture of a $SiO_2$ support and an alumoxane in an aromatic hydrocarbon solvent
b) heating said mixture to 50°C to 100°C
c) cooling the mixture to room temperature
d) optionally drying
e) preparing a mixture of a metallocene of the formula (I) and an aromatic or aliphatic hydrocarbon solvent,
f) reacting the mixture of e) with the mixture of c) respectively d) at room temperature and
g) drying the so obtained catalyst composition.

6. Process according to claim 5, **characterized in that** in step a) and e) as aromatic solvent benzene, toluene, xylene or an alkyl or halogen substituted aromatic compound is used and that the amount of the solvent used is less than the pore volume (ml/g) of the silica support up to less than 5 times the pore volume of the silica support.

7. Process according to claim 5 or 6, **characterized in that** in step b) the mixture is heated to 70°C to 80°C.

8. Use of the catalyst composition according to anyone of the preceding claims 1 to 4 for the production of polyolefins selected from the group of polyethylene and polypropylene homopolymers; polyethylene-, polypropylene- and polypropylene/ethylene copolymers comprising from 0 to 20 wt % $C_3$ to $C_{30}$-alpha-olefin or $C_4$ to $C_{30}$-diene-derived units.

9. Use according to claim 8 for the production of ethylene homopolymer and copolymer compositions having a density in the range of about 860 $kg/m^3$ to about 970 $kg/m^3$, a weight average molecular weight from 60 000 to about 350 000 g/mol, a number average molecular weight of from 10 000 to about 150 000 g/mol and a $MFR_2$ (2.16kg/190°C) of 0.1 to 200 g/10 min, whereby the polyolefin composition further can show unimodal, bimodal or multimodal molecular weight distribution.

10. Process for the preparation of polyolefins, comprising (i) an alpha-olefin homopolymer or copolymer component and, optionally, (ii) an alpha-olefin homopolymer or copolymer component including the steps of:

(a) polymerizing in a slurry reactor alpha-olefin monomers, optionally together with one of more comonomers, in the presence of the catalyst composition according to anyone of the preceding claims 1 to 4 to produce polymer component (i),
and
(b) optionally transferring the reaction product of step (a) to a subsequent gas phase reactor and polymerizing alpha-olefin monomers, optionally together with one or more comonomers, in the presence of the reaction product of step
(a) to produce polymer component (ii) for obtaining the polymer composition, and
(c) recovering the obtained composition.

11. Process according to claim 10, **characterized in that** polyethylene compositions containing as comonomers 0 to 20 wt % of $C_3$- to $C_6$-alpha-olefins, with a density in the range of 910 to 950 $kg/m^3$ are produced.

12. Polymer compositions obtained by a process according to claim 10 or 11.

**EUROPEAN SEARCH REPORT**

Application Number

EP 08 10 3994

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/207762 A9 (WENZEL TIMOTHY T [US] ET AL) 6 November 2003 (2003-11-06)<br>* claims 24,33 *<br>* paragraph [0276] *<br>----- | 1-12 | INV.<br>C08F10/00<br>C08F4/6592 |
| A | EP 1 541 598 A (MARUZEN PETROCHEM CO LTD [JP]) 15 June 2005 (2005-06-15)<br>* the whole document *<br>----- | 1-12 | |

TECHNICAL FIELDS
SEARCHED      (IPC)

C08F

The present search report has been drawn up for all claims

| Place of search | Date of completion of the search | Examiner |
|---|---|---|
| Munich | 29 September 2008 | Thomas, Dominik |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

## ANNEX TO THE EUROPEAN SEARCH REPORT
## ON EUROPEAN PATENT APPLICATION NO.

EP 08 10 3994

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2008

| Patent document cited in search report | | Publication date | Patent family member(s) | | Publication date |
|---|---|---|---|---|---|
| US 2003207762 | A9 | 06-11-2003 | US | 2004039138 A1 | 26-02-2004 |
| EP 1541598 | A | 15-06-2005 | CN | 1637024 A | 13-07-2005 |
| | | | JP | 4133772 B2 | 13-08-2008 |
| | | | JP | 2005162838 A | 23-06-2005 |
| | | | US | 2005215736 A1 | 29-09-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0279863 A
- US 5017665 A
- EP 0347128 A
- EP 0776908 A
- EP 0897394 A
- EP 0792297 A
- EP 1231225 A
- EP 1462464 A
- US 4665208 A
- US 4952540 A
- US 5091352 A
- US 5206199 A
- US 5204419 A
- US 4874734 A
- US 4924018 A
- US 4908463 A
- US 4968827 A
- US 5308815 A
- US 5329032 A
- US 5248801 A
- US 5235081 A
- US 5157137 A
- US 5103031 A
- US 5391793 A
- US 5391529 A
- US 5693838 A
- US 5731253 A
- US 5731451 A
- US 5744656 A
- EP 0561476 A
- EP 0279586 B1
- EP 0594218 A
- WO 9410180 A
- US 4748221 A
- US 4789359 A
- US 4923833 A
- US 4921825 A
- US 5283278 A
- US 5705578 A
- EP 0279863 B
- WO 9744371 A
- US 6407185 B
- US 4975485 A
- US 4511704 A
- US 5290745 A
- US 4003712 A
- US 4588790 A
- US 4302566 A
- US 5834571 A
- US 5352749 A
- US 5462999 A
- EP 0887379 A
- WO 9212182 A
- WO 2005002744 A

### Non-patent literature cited in the description

- Experimental Methods in Catalytic Research. Academic Press, 1968, vol. 1, 67-96
- **Innes.** Total Porosity and Particle Density of Fluid Catalysts By Liquid Titration. *Analytical Chemistry,* March 1956, vol. 28 (3), 332-334
- **F. P. Alt et al.** *MACROMOL. SYMP.,* 2001, vol. 163, 135-143
- *METALLOCENE-BASED POLYOLEFINS,* 2000, vol. 2, 366-378